(19) Europäisches Patentamt
European Patent Office
Office européen des brevets

(11) **EP 1 811 511 A2**

(12) **EUROPEAN PATENT APPLICATION**

(43) Date of publication:
**25.07.2007 Bulletin 2007/30**

(51) Int Cl.:
***G11B 7/09*** *(2006.01)*

(21) Application number: **07100709.0**

(22) Date of filing: **18.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **19.01.2006 JP 2006011329**

(71) Applicant: **SONY CORPORATION Tokyo (JP)**

(72) Inventors:
• **SAITO, Kimihiro TOKYO (JP)**
• **TAKAGI, Katsuji TOKYO (JP)**
• **ISHIMOTO, Tsutomu TOKYO (JP)**

(74) Representative: **Thévenet, Jean-Bruno et al Cabinet Beau de Loménie 158, rue de l'Université 75340 Paris Cédex 07 (FR)**

(54) **Optical recording/reprducing apparatus, optical pickup, and tracking error detecting method**

(57) An optical recording/reproducing apparatus includes an optical pickup and a control section. The optical pickup (100) includes: a detecting section (120); an optical system (300) that radiates light from a light source (101) onto an optical recording medium (90) as near-field light by a condenser lens (104) having a numerical aperture of 1 or more, and introduces light reflected by the optical recording medium (90) toward the detecting section (120); and a drive section (107) that drives the condenser lens (104). The optical recording/reproducing apparatus performs control for recording and/or reproducing onto/from the optical recording medium (90) based on an optical output detected by the detecting section (120) of the optical pickup (100). The optical system (300) includes a beam splitter (102) that reflects both P-and S-polarized components of reflected light from the optical recording medium (90), and a separating section (110) that separates the P-and S-polarized components reflected by the beam splitter (102). The detecting section (120) individually detects the P-and S-polarized components separated by the separating section (110).

FIG. 1A

## Description

BACKGROUND OF THE INVENTION

1. Field of the Invention

The present invention relates to an optical recording/reproducing apparatus, an optical pickup, and a tracking error detecting method, which are used for so-called near-field optical recording/reproduction in which light from a light source is radiated as near-field light onto an optical recording medium by a condenser lens having a numerical aperture of 1 or more to thereby perform recording and/or reproduction.

2. Description of the Related Art

Optical recording media (including magneto-optical recording media) such as a compact disc (CD), a mini disc (MD), a digital versatile disc (DVD) are widely used as storage media for music information, video information, data, programs, and so on. However, in order to achieve higher sound quality, higher image quality, longer recording duration, and greater recording capacity with respect to these information, an optical recording medium having a greater recording capacity and an optical recording/reproducing apparatus (including magneto-optical recording/reproducing apparatus) for performing recording/reproduction onto/from such an optical recording medium are being desired.

With regard to an optical recording/reproducing apparatus, in order to meet the above-mentioned demand, attempts have been made at reducing the wavelength of its light source such as a semiconductor laser, increasing the numerical aperture of a condenser lens, and reducing the spot size of light converged by the condenser lens.

The size of a light spot on an optical recording medium is roughly given by $\lambda$/NA (where $\lambda$ is the wavelength of irradiation light, and NA is the numerical aperture), and the resolution is also proportional to this value. Here, the following expression holds with regard to the numerical aperture NA:

$$NA = n \times \sin\theta$$

(where n is the refractive index of a medium, and $\theta$ is the angle of the marginal ray of an objective lens)

If the medium is air, the numerical aperture NA cannot exceed 1.

As a technique that overcomes this limitation, an optical pickup of a near-field-light optical recording/reproducing system using an SIL (Solid Immersion Lens) has been proposed (see I. Ichimura et. al, "Near-Field Phase-Change Optical Recording of 1.36 Numerical Aperture," Jpn. J. Appl. Phys. Vol. 39, 962-967 (2000)).

Even in the case where an SIL or the like is used as described above, to perform recording/reproduction by rotating an optical recording medium having a disc-like shape or the like, a gap (so-called air gap; hereinafter simply referred to as gap) must be present between the optical recording medium and SIL. To achieve NA larger than 1 by using an evanescent wave, that is, light attenuating exponentially away from the interface, between the SIL and the optical recording medium, and thus reduce the size of the recording/reproduction area, it is necessary to make this gap extremely small.

The above-mentioned gap between the optical recording medium and the surface of SIL is desirably not more than one-tenth of the wavelength of the light used for recording/reproduction (for example, see K. Saito et. al, "A Simulation of Magneto-Optical Signals in Near-Field Recording," Jpn. J. Appl. Phys. Vol. 38, 6743-6749 (1999)).

Further, reproduction using a phase-change recording/reproducing disc having a multi-layer thin film formed on its surface, or a reproduction-only disc having irregular pits on it surface has been proposed (for example, see M. Shinoda et. al, "High Density Near-Field Optical Disc Recording," Jpn. J. Appl. Phys. Vol. 44, 2005, pp3537, and M. Furuki et. al, "Progress in Electron Beam Mastering of 100Gb/inch2 Density Disc," Jpn. J. Appl. Phys. Vol. 43, 5044-5046 (2004)).

Incidentally, as in the case of performing optical recording/reproduction onto/from an optical disc or the like in the related art, the near-field optical recording/reproduction as described above also requires detection of a tracking error with good accuracy.

First, a brief description will be given of a light spot positioning method commonly employed in the related art.

In the case where an optical recording medium is, for example, a disc-shaped medium, a spiral or concentric track is formed in the recording surface of the optical disc. The recording/reproduction of a signal is performed by condensing the laser light having passed through an objective lens built in an optical head onto the recording surface to thereby form a minute light spot.

As the optical disc rotates, vibration of the recording surface in the direction of the disc rotation axis (hereinafter referred to as surface vibration), and vibration of the track in the disc radius direction (hereinafter referred to as eccentricity) occur. It may be difficult to perform the recording/reproduction of a signal without error unless the focal shift of the light spot from the recording surface with respect to the generated surface vibration, and the positional shift of the light spot from the track with respect to the generated eccentricity are made to fall within a certain error range. Accordingly, to radiate a light spot onto the track properly, it is required to performe high-accuracy positioning by moving the objective lens. The objecting lens is driven by an actuator in two directions including the rotation axis direction and radial direction of the optical disc.

In the detection system, the focal shift of the light spot is detected using reflected light from the optical disc, and a focus error signal is output. Further, using the reflected light from the optical disc, the detecting system detects the shift of the light spot from the track center and outputs a tracking error signal. The knife-edge method, astigmatism method, or the like is generally used for the detection of the focal shift. The push-pull method or the like, for example, is generally used for the detection of a shift from the track center.

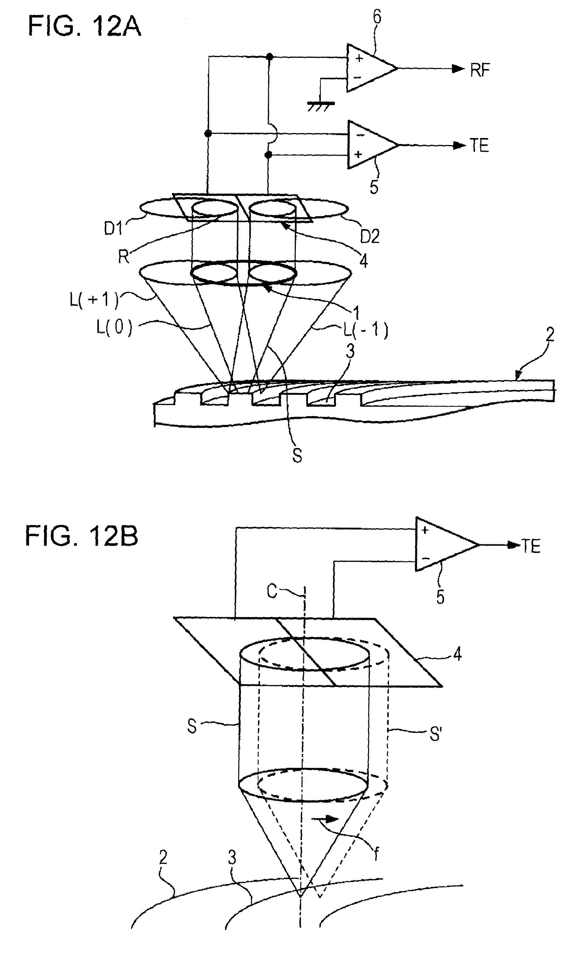

As shown in Fig. 12A, in this push-pull method, $\pm 1$-order light L(+1) and L (-1), and 0-order light diffracted by grooves 3 or so-called guide grooves on an optical disc are detected by a detector 4 through an objecting lens opening 1. The detector 4 is split in the direction corresponding to the extending direction of the grooves 3, the sum signal of the respective split regions is output by an amplifier 6 as an RF reproduction signal, and a push-pull component that overlaps the $\pm 1$-order light indicated by each of the solid lines D1 and D2, that is, a difference signal thereof, is output as a tracking error signal TE by an amplifier 5.

On the other hand, as the objective lens moves following the eccentricity of the disc during the tracking operation, as shown in Fig. 12B, the light distribution on the detector 4 is shifted as indicated by the arrow f from the position in alignment with the optical axis C indicated by the solid line S into the position indicated by the broken line S. At this time, the signal TS detected by the amplifier 5 contains, other than the originally intended tracking error, an offset generated due to the shift of light distribution.

Such an offset also becomes a problem when performing the near-field optical recording/reproduction as described above.

However, since it has been proposed to use the above-mentioned push-pull method for tracking also in the case of optical recording/reproduction using SIL, when the objective lens moves following the eccentricity of the disc during the tracking operation, the light distribution on the detector moves, causing an offset due to the shift of the distribution to be generated in addition to the originally intended tracking error, which may lead to de-tracking at the time of recording or signal deterioration at the time of reproduction.

SUMMARY OF THE INVENTION

As a method of detecting the gap between the condenser lens and the optical recording medium during the above-mentioned near-field optical recording/reproduction using an SIL or the like, the present applicant has proposed a method according to which recorded mark information is read from a change in the light quantity of a polarized component having the same polarization as the light incident on the optical recording medium, and the light quantity of a polarized component orthogonal to the polarization of the light incident on the optical recording medium is used as a gap error signal for controlling the spacing between the lens surface and the surface of the optical recording medium (see US 2004/001307A1).

Further, the present applicant has also proposed in US 2004/0145995A1 a structure for detecting this gap error signal utilizing polarized components by means of a simpler optical system.

However, at present, no consideration has been given to the method of correcting the offset of the condenser lens in the tracking direction as described above.

In view of the above-mentioned problems, there is a need for obtaining an offset-corrected tracking signal by means of a relatively simple optical system configuration when performing near-field optical recording/reproduction.

According to an embodiment of the present invention, there is provided an optical recording/reproducing apparatus including an optical pickup and a control section, the optical pickup including: a detecting section; an optical system that radiates light from a light source onto an optical recording medium as near-field light by a condenser lens having a numerical aperture of 1 or more, and introduces light reflected by the optical recording medium toward the detecting section; and a drive section that drives the condenser lens, the optical recording/reproducing apparatus being configured to perform control for recording onto and/or reproducing from the optical recording medium on the basis of an optical output detected by the detecting section of the optical pickup. The optical system includes a beam splitter that reflects both a P-polarized component and an S-polarized component of reflected light from the optical recording medium, and a separating section that separates the P-polarized component and the S-polarized component reflected by the beam splitter, and the detecting section individually detects the P-polarized component and the S-polarized component separated by the separating section. Further, the detecting section includes at least a first detecting section that detects a polarized component having the same polarization as polarization of light incident on the optical recording medium, and a second detecting section that detects a polarized component orthogonal to the polarization of light incident on the optical recording medium. The first and second detecting sections each include two or more light-receiving regions that are split at least in a direction corresponding to an extending direction of a recording track of the optical recording medium. Further, a tracking control signal in which offset of the condenser lens is corrected is obtained by computation using a first difference signal and a second difference signal, the first difference signal being a difference signal of the light-receiving regions of the first detecting section which are split in the direction corresponding to the extending direction of the recording track, the second difference signal being a difference signal of the light-receiving regions of the second detecting section which are split in the direction corresponding to the extending direction of the recording track. The control section controls the drive section on the basis of the tracking control signal.

Further, according to an embodiment of the present invention, in the above-mentioned optical recording/reproducing apparatus, a Wollaston prism, a Glan-Thompsom prism, or a polarization splitting grating may be used as the separating section that individually separates the P-polarized component and the S-polarized component.

When using a polarization splitting grating, 0-order light to be diffracted is detected by the first detecting section, and +1-order light or - 1-order light is detected by the second detecting section.

Further, an optical pickup according to an embodiment of the present invention is to be used in the optical recording/reproducing apparatus according to the above-mentioned embodiment of the present invention. That is, there is provided an optical pickup including: a detecting section; an optical system that radiates light from a light source onto an optical recording medium as near-field light by a condenser lens having a numerical aperture of 1 or more, and introduces light reflected by the optical recording medium toward the detecting section; and a drive section that drives the condenser lens on the basis of an optical output detected by the detecting section. The optical system includes a beam splitter that reflects both a P-polarized component and an S-polarized component of reflected light from the optical recording medium, and a separating section that separates the P-polarized component and the S-polarized component reflected by the beam splitter, and the detecting section individually detects the P-polarized component and the S-polarized component separated by the separating section. The detecting section includes at least a first detecting section that detects a polarized component having the same polarization as polarization of light incident on the optical recording medium, and a second detecting section that detects a polarized component orthogonal to the polarization of light incident on the optical recording medium. The first and second detecting sections each include two or more light-receiving regions that are split at least in a direction corresponding to an extending direction of a recording track of the optical recording medium. Further, a difference signal of the light-receiving regions of the first detecting section which are split in the direction corresponding to the extending direction of the recoding track is output to the external as a first difference signal, and a difference signal of the light-receiving regions of the second detecting section which are split in the direction corresponding to the extending direction of the recoding track is output to the external as a second difference signal. A tracking control signal in which offset of the condenser lens is corrected is externally computed from the first difference signal and the second difference signal.

Further, a tracking error signal detecting method according to an embodiment of the present invention is a method used for the optical pickup and the optical recording/reproducing apparatus according to the above-mentioned embodiments. That is, there is provided a tracking error signal detecting method in which light from a light source is radiated onto an optical recording medium as near-field light by a condenser lens having a numerical aperture of 1 or more, light reflected by the optical recording medium is detected as an optical output, and a control signal for driving the condenser lens onto a recording track of the optical recording medium is obtained on the basis of the detected optical output, including the steps of: detecting a P-polarized component and an S-polarized component of reflected light from the optical recording medium individually by a detecting section; providing the detecting section with at least a first detecting section and a second detecting section, the first detecting section detecting a polarized component having the same polarization as polarization of light incident on the optical recording medium, the second detecting section detecting a polarized component orthogonal to the polarization of light incident on the optical recording medium; providing each of the first and second detecting sections with two or more light-receiving regions that are split at least in a direction corresponding to an extending direction of a recording track of the optical recording medium; outputting as a first difference signal a difference signal of the light-receiving regions of the first detecting section which are split in the direction corresponding to the extending direction of the recording track; outputting as a second difference signal a difference signal of the light-receiving regions of the second detecting section which are split in the direction corresponding to the extending direction of the recording track; and obtaining a tracking control signal in which offset of the condenser lens is corrected, by performing computation using the first difference signal and the second difference signal.

According to the present invention, a beam splitter that reflects both the P-polarized component and the S-polarized component is used, the P-polarized component and the S-polarized component reflected by the beam splitter are separated, and of the separated polarized components, the light intensity of a polarized component orthogonal to the polarization of light incident on the optical recording medium is detected, thereby making it possible to detect a signal corresponding to the distance between a near-field-light radiating section such as an SIL and the optical recording medium by means of a simple and efficient structure.

In particular, by using a Wollaston prism, a Glan-Thompsom prism, or a polarization splitting grating as the separating section, it is possible to construct an optical pickup or optical recording/reproducing apparatus by means of a simple optical system.

Furthermore, when light-receiving regions that are split at least in the direction corresponding to the extending direction of the recording track of the optical recording medium are provided in the detecting section that detects a polarized component orthogonal to the polarization of light incident on the optical recording medium, and a difference signal of the light-receiving regions (that is, the second difference signal) is obtained, the resulting difference signal includes information on an offset due to positional shift of the condenser lens.

Accordingly, by multiplying this second difference signal by a suitable coefficient, and subtracting the resultant from a difference signal (the first difference signal) detected from a polarized component of the same polarization as light incident on the optical recording medium, that is, a push-pull signal, an offset-corrected tracking error signal can be obtained.

As has been described above, according to the present invention, when performing near-field optical recording/reproduction, it is possible to obtain an offset-corrected tracking signal by means of a relatively simple optical system configuration.

BRIEF DESCRIPTION OF THE DRAWINGS

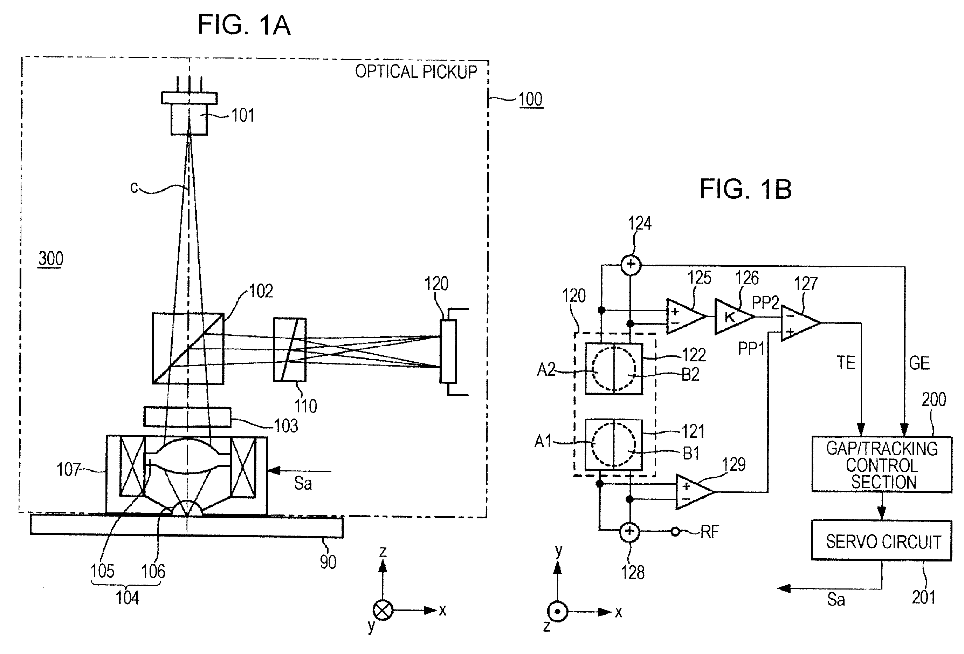

Figs. 1A and 1B are schematic diagrams showing an example of the main portion of an optical recording/reproducing apparatus according to a first embodiment of the present invention, of which Fig. 1A is a schematic side-view diagram of an optical pickup, and Fig. 1B is a schematic diagram including the planar structure of a detecting section;

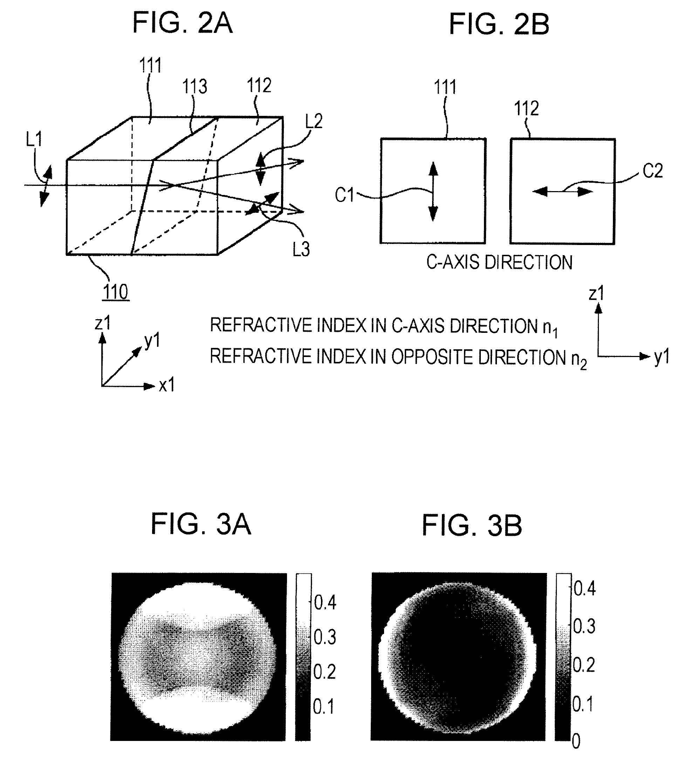

Figs. 2A and 2B are explanatory diagrams showing a Wollaston prism applied to the optical pickup according to the first embodiment of the present invention, of which Fig. 2A is a schematic perspective diagram of the Wollaston prism, and Fig. 2B is a plan diagram showing the polarization direction in each prism;
Fig. 3A is a diagram showing the simulation results of light distribution on a first detecting section in the optical pickup according to the first embodiment of the present invention, and Fig. 3B is a diagram showing the simulation results of light distribution on a second detecting section in the optical pickup according to the first embodiment of the present invention;

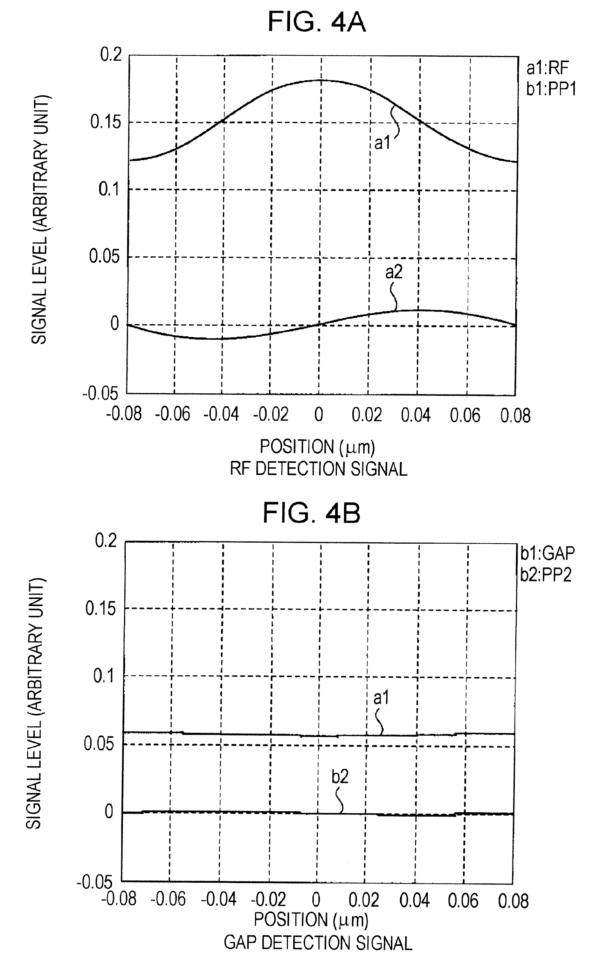

Figs. 4A and 4B are diagrams showing the signal level in a case where no condenser lens offset has occurred in the optical pickup according to the first embodiment of the present invention, of which Fig. 4A shows the RF detection signal, and Fig. 4B shows the gap detection signal;

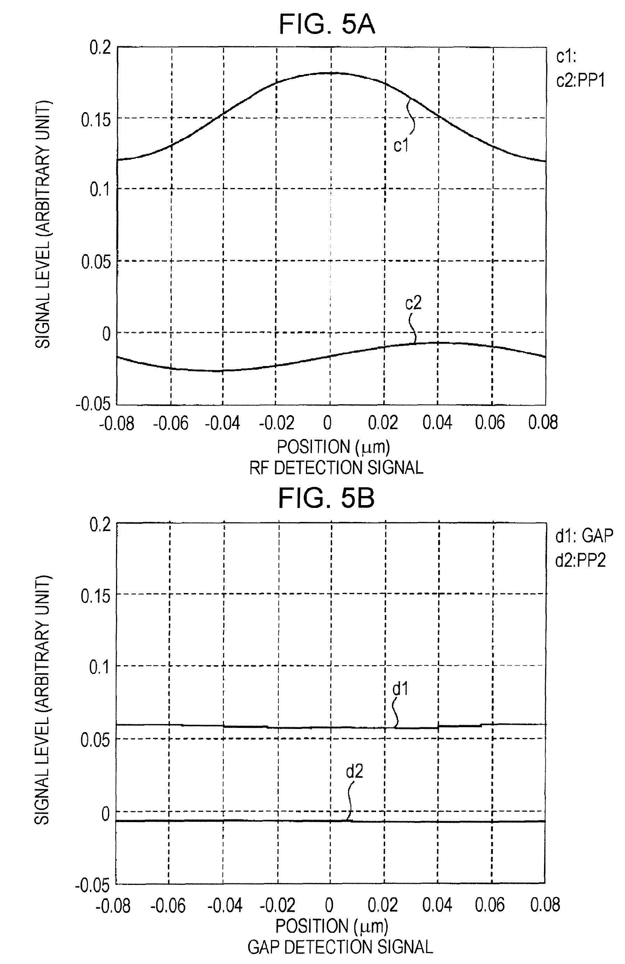

Figs. 5A and 5B are diagrams showing the signal level in a case where condenser lens offset has occurred in the optical pickup according to the first embodiment of the present invention, of which Fig. 5A shows the RF detection signal, and Fig. 5B shows the gap detection signal;

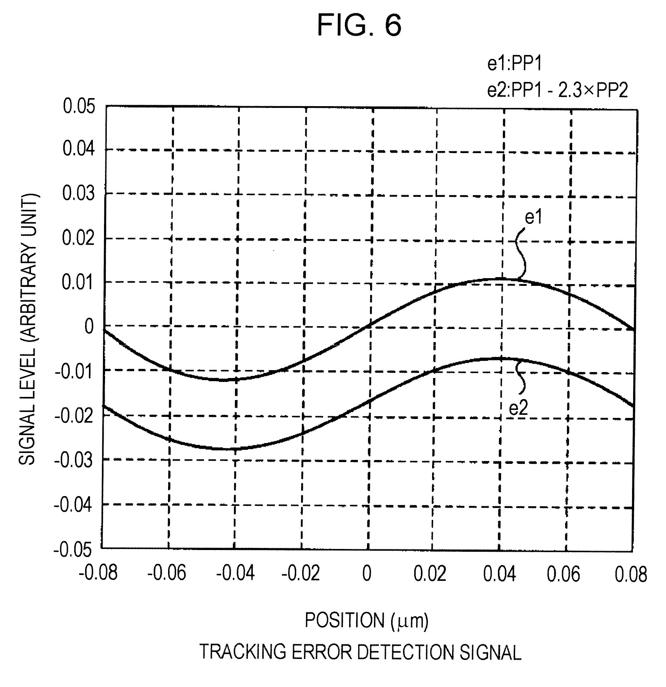

Fig. 6 is a diagram showing the signal level of a tracking error detection signal in the optical pickup according to the first embodiment of the present invention;

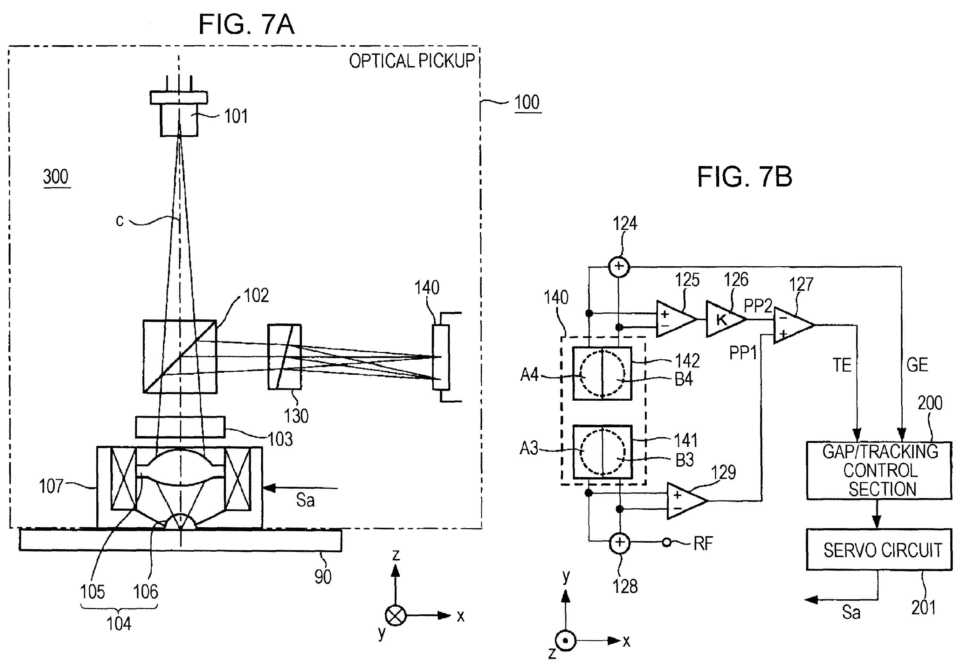

Figs. 7A and 7B are schematic diagrams showing an example of the main portion of an optical recording/reproducing apparatus according to a second embodiment of the present invention, of which Fig. 2A is a schematic side-view diagram of an optical pickup, and Fig. 2B is a schematic diagram including the planar structure of a detecting section;

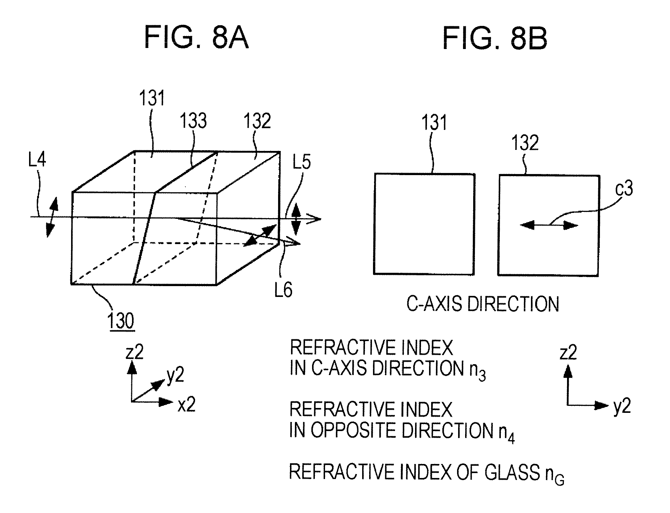

Figs. 8A and 8B are explanatory diagrams showing a Glan-Thompsom prism applied to the optical pickup according to the second embodiment of the present invention, of which Fig. 8A is a schematic perspective diagram of the prism, and Fig. 8B is a plan diagram showing the polarization direction in each prism;

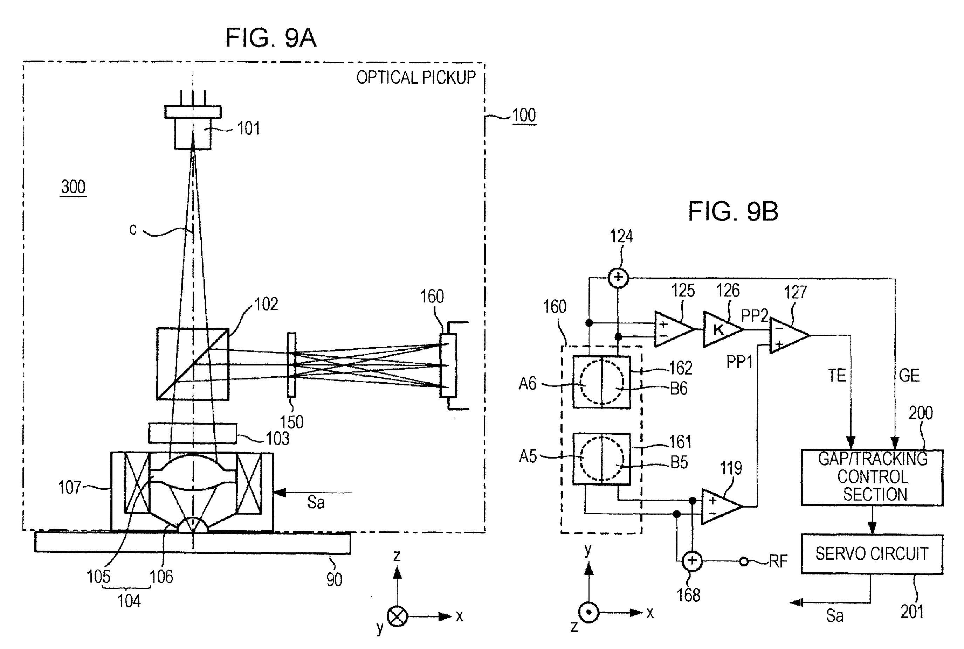

Figs. 9A and 9B are schematic diagrams showing an example of the main portion of an optical recording/reproducing apparatus according to a third embodiment of the present invention, of which Fig. 9A is a schematic side-view diagram of an optical pickup, and Fig. 9B is a schematic diagram including the planar structure of a detecting section;

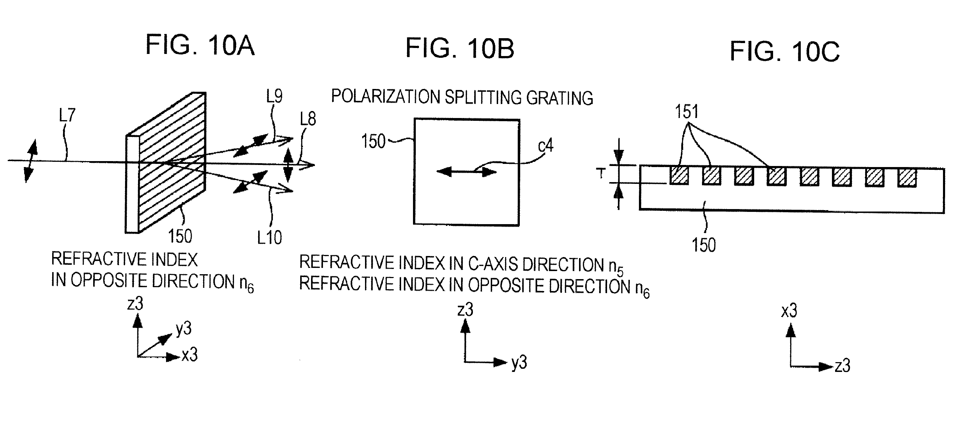

Figs. 10A to 10C are explanatory diagrams showing a polarization splitting grating applied to the optical pickup according to the third embodiment of the present invention, of which Fig. 10A is a schematic perspective diagram of the polarization splitting grating, Fig. 10B is a plan diagram of the polarization splitting grating, and Fig. 10C is a schematic sectional diagram of the polarization splitting grating;

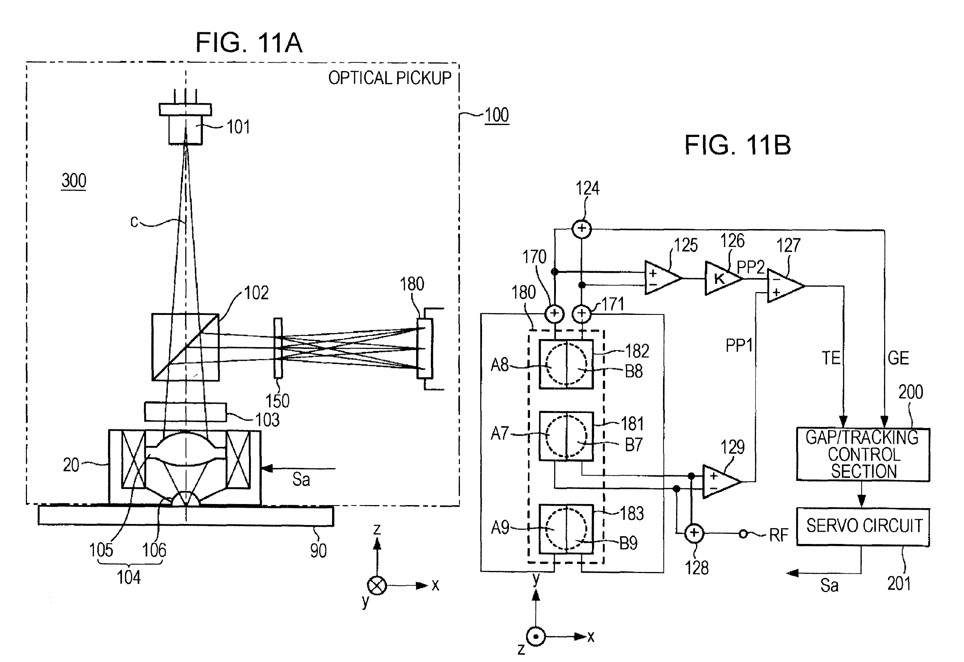

Figs. 11A and 11B are schematic diagrams showing an example of the main portion of an optical recording/reproducing apparatus according to a fourth embodiment of the present invention, of which Fig. 11A is a schematic side-view diagram of an optical pickup, and Fig. 11B is a schematic diagram including the planar structure of a detecting section; and
Figs. 12A is an explanatory diagram of a tracking error detecting method according to the related art, and Fig. 12B is an explanatory diagram illustrating the shift of light distribution when offset has occurred.

DESCRIPTION OF THE PREFERRED EMBODIMENTS

While embodiments of the present invention will be described below, prior to the description of the detailed structure of the present invention, the definitions of the terms used in the description below are provided as follows. The term "optical recording/reproducing apparatus" as used in this specification refers not only to an optical recording and reproducing apparatus for performing recording onto and reproduction from an optical recording medium but also to a recording apparatus for performing only recording onto an optical recording medium or a reproducing apparatus for performing only reproduction from an optical recording medium. Further, the term "optical recording medium" as used herein includes read-only, writable, and read-write optical recording media, and also irregular pits and various kinds of optical recording medium for performing recording/reproduction such as phase change recording, dye recording, and optical magnetic recording.

Figs. 1A and 1B are schematic diagrams of an optical recording/reproducing apparatus according to a first embodiment of the present invention. Fig. 1A is a schematic side-view diagram of an example of an optical pickup according to the first embodiment of the present invention, and Fig. 1B is a schematic diagram of the main portion of an example of the optical recording/reproducing apparatus according to the first embodiment of the present invention, including the planar structure of a detecting section of the optical pickup shown in Fig. 1A.

As indicated by the two-dot chain line in Fig. 1A, an optical pickup 100 includes a light source 101 such as a semiconductor laser, an optical system 300 that irradiates an optical recording medium 90 with light from the light source 101 as near-field light by means of a condenser lens 104 with a numerical aperture of 1 or more, and introduces the light reflected by the optical recording medium 90 to a detecting section 120, and a drive section 107 formed by a two-axis or three-axis actuator or the like for driving the condenser lens 104.

In the optical system 300, a beam splitter 102 that transmits light from the light source 101 and reflects both the P-polarized component and S-polarized component of the reflected light from the light recording medium 90, and a λ/4 plate (quarter-wave plate) 103 are arranged in this order between the light source 101 and the condenser lens 104. Further, a Wollaston prism 110 is provided as a separating section for separating the P-polarized component and S-polarized component reflected by the beam splitter 102. The detecting section 120 for individually detecting the P-polarized component and the S-polarized component separated by the Wollaston prism 110 is provided on the emergent side of the Wollaston prism 110.

In this case, an optical lens 105 and a near-field-light radiating section 106 such as an SIL are provided as the condenser lens 104. As described above, an SIL is a lens that is arranged in very close proximity, that is, with a gap on the order of one tenth of the wavelength of the light used for recording and reproduction, for example about 50 nm, to the surface of the optical recording medium 90. The SIL is formed as a so-called semi-spherical lens whose surface on the side in close proximity to the optical recording medium 90 is, for example, a flat surface, and whose surface on the side in close proximity to an objective lens is a spherical surface, with the thickness of the lens being equal to the radius of the spherical surface. Alternatively, the SIL may be formed as a super semispherical lens whose thickness is set larger than the radius of the spherical surfacing forming the lens. Further, the surface on the side in close proximity to the optical recording medium may be formed such that only its central portion through which a beam of laser light passes is flat, and the portion in the periphery of this portion is cut away in a conical or stepped shape. While the surface on the side in close proximity to the optical recording medium 90 will be simply referred to as a front end surface in the following description, this surface may be curved to a very limited extent and at least refers to the surface of the area through which a beam of laser light passes.

By forming the condenser lens 104 by the optical lens 105 and the near-field-light radiating section 106 in this way, the numerical aperture (NA) of the condenser lens becomes 1 or more, thereby making it possible to perform recording or reproduction in the near-field-light recording/reproducing mode. It should be noted that an SIM (Solid Immersion Mirror) or the like, for example, may also be used as the near-field-light radiating section 106.

In the optical pickup 100 configured as described above, light emerging from the light source 101 is passed through the beam splitter 102 to be incident on the 1/4 wavelength plate. The light beam incident from the semiconductor laser 101 is caused to travel straight through the beam splitter 102 to be incident on the λ/4 plate 103. The λ/4 plate 103 is placed with its crystal axis tilted by 45° with respect to the incident polarization direction, and causes incident light to emerge as circularly polarized light. This emergent light is made incident on a signal-recording surface of the optical recording medium 90 as near-field light by the condenser lens 104.

The light reflected by the surface of the optical recording medium 90 is made incident on the λ/4 plate 103 again via the near-field-light radiating section 106 and the optical lens 105, and changes from circularly polarized light into linearly polarized light as it passes through the λ/4 plate 103. Both of the S-polarized component and P-polarized component of the light beam transmitted through the λ/4 plate 103 are reflected laterally by the beam splitter 102. The beam splitter 102 reflects, for example, 50% of the light incident from the optical lens 105 laterally at its reflecting surface.

The return light reflected laterally by the beam splitter 102 is made incident on the separating section for separating S-polarized and P-polarized components. The Wollaston prism 110 is used as the separating section in this example. The Wollaston prism 110 separates the light into S-polarized and P-polarized components. Of the S-polarized and P-polarized components thus separated, a light component having the same polarization as the light incident on the optical recording medium 90 is made incident on a first detecting section 121 of the detecting section 120, and a light component of different polarization from the light incident on the optical recording medium 90 is made incident on a second detecting section 122 of the detecting section 120.

As shown in Fig. 2A, the Wollaston prism 110 is formed by bonding two prisms, a first prism 111 and a second prism 112, together. The two prisms 111 and 112 are bonded together so that the C-axes of their crystals differ from each other by 90° as indicated by the arrows C1 and C2 in Fig. 2B. As shown in Fig. 2A, with respect to an incidence plane where the travel direction of light is indicated by the arrow x1, and the horizontal and vertical directions within the incidence plane are indicated by the arrows y1 and z1, respectively, a bonding surface 113 of the two prisms 111 and 112 is tilted in the travel direction of light indicated by the arrow x1. Due to refraction at the bonding surface 113, incident light L1 is separated as indicated by the arrows L2 and L3 depending on the polarization. That is, a light component polarized in the same direction as the C-axis direction of the first prism 111 has an angle of emergence θO1 at the bonding surface 113 which satisfies the following relation:

$$n1 \times \sin\theta i1 = n2 \times \sin\theta O1$$

where θi1 is the incidence angle. Further, as shown in Fig. 2B, n1 is the refractive index in the C-axis direction, and n2 is the refractive index in the direction opposite to the C-axis direction. Further, light whose polarization direction is opposite to the C-axis direction of the first prism 111 has an angle of emergence θO2 at the bonding surface 113 which satisfies the following relation:

$$n2 \times \sin\theta 1 = n1 \times \sin\theta O2.$$

Accordingly, by placing the detecting section 120, which has the first and second detecting sections 121 and 122 arranged adjacent to each other on the same plane, at the emerging position of the light transmitted through the Wollaston prism 110, the polarized component of the same polarization as the light incident on the optical recording medium 90 can be made incident on the first detecting section 121 of the detecting section 120, and the other polarized component, that is, the polarized component of the polarization orthogonal to the polarization of the light incident on the optical recording medium 90, can be made incident on the second detecting section 122 of the detecting section 120.

In this case, the S-polarized and P-polarized components of the reflected light from the optical recording medium 90 can be individually detected by means of a simple structure using one beam splitter 102 and one separating section, that is, the Wollaston prism 110. Accordingly, as compared with a case in which a plurality of beam splitters or polarization beam splitters are used as in the related art, the structure of the optical pickup can be simplified, which also contributes to reducing the size of the optical pickup.

Further, since the two polarized components emerging from the Wollaston prism 110 are in close proximity to each other, it is possible to use a small-sized detecting section 120 having light-receiving sections provided at two adjacent positions on the same base such as the same semiconductor substrate or the like. As compared with a case where a plurality of photo-detectors are arranged at different positions as in the related art, the structure of the photo-detector can be simplified. Further, when mounted to an optical recording/reproducing apparatus, the optical pickup according to this embodiment also contributes to simplifying the structure and reducing the size of the recording/reproducing apparatus.

Next, referring to Fig. 1B, a method of detecting a signal output by the detecting section 120 will be described.

According to the present invention, as shown in Fig. 1B, the first and second detecting sections 121 and 122 are respectively provided with two light-receiving regions A1 and B1, and A2 and B2 that are split at least in the direction corresponding to the extending direction of the recording track of the optical recording medium 90.

It should be noted that in Fig. 1A, when the optical recording medium 90 has, for example, a disk-like shape, the radial direction is taken as the x-axis, the extending direction (so-called tangential direction) of the recording track is taken as the y-axis, and the direction perpendicular to the surface of the optical recording medium 90 (which substantially corresponds to the optical axis of the optical system 300) is taken as the z-axis. In Fig. 1B, the directions corresponding to these directions are taken as the x-axis, the y-axis, and the z-axis, respectively. In the illustrated example, the first and second detecting sections 121 and 122 are each split in two along a parting line extending along the y-axis direction.

The sum signal of the respective light-receiving regions A1 and B1 of the first detecting section 121 is computed by an adder 128, and is output as an RF reproduction signal. This is defined as a first sum signal. Further, the difference signal of the light-receiving regions A1 and B1 is computed by a subtracter 129, and is output as a first difference signal.

The sum signal of the light-receiving regions A2 and B2 of the second detecting section 122 is computed by an adder 124, and is output as a gap error signal GE. This is defined as a second sum signal. Further, the difference signal of the light-receiving regions A2 and B2 is computed by a subtracter 125 and output. This is defined as a second difference signal.

As will be described later, the second difference signal is a signal that includes information on the offset of the condenser lens. By subtracting a signal PP2, which is obtained by multiplying the second difference signal by a coefficient k for adjusting an output value by a multiplier 126, from the first difference signal PP1 by a subtracter 127, an offset-corrected tracking control signal TE can be obtained.

The tracking error signal TE and the above-mentioned gap error signal GE thus obtained are input to a control section 200. The control section 200 sends a command to a servo circuit 201 so as to keep the light intensity of each of the tracking error signal and gap error signal obtained from the detecting section 120 to be a predetermined intensity, and outputs a signal Sa for driving the drive section 107 in an appropriate manner, thereby placing the condenser lens 104 onto a predetermined recording track of the optical recording medium 90, and keeping the spacing between the surface of the optical recording medium 90 and the front end portion of the near-field-light radiating section 106 such as an SIL to be a fixed distance. In this example, the near-field-light radiating section 106 such as an SIL is controlled in its position integrally with the optical lens 105 by the drive section 107. In this way, it is possible to perform recording and/or reproduction in which near-field-light is irradiated onto the optical recording medium 90.

It should be noted that the RF signal obtained from the first sum signal becomes a signal corresponding to the irregularities of the pits or recording marks on the optical recording medium 90, thus enabling the reproduction of information recorded on the optical recording medium 90. The second sum signal becomes the gap error signal GE whose light intensity changes in accordance with the distance between the surface of the optical recording medium 90 and the front end surface of the near-field-light radiating section 106 such as an SIL.

This second sum signal becomes a gap error signal due to the same principle as that described in US 2004/0013077A1 filed by the applicant of the present invention mentioned above. That is, of the reflected light (return light) reflected by the optical recording medium after being emitted from the light source such as a semiconductor laser, a component whose polarization state is orthogonal to the polarization state of the reflected light at the time when the distance between the surface of the optical recording medium and the front end surface of the SIL or the like is 0 is detected, thereby obtaining a gap error signal corresponding to the distance between the surface of the optical recording medium and the front end surface of the SIL.

Next, description will be given with regard to the inclusion in the second difference signal of the information on the offset of the condenser sheet mentioned above.

A simulation was carried out on the distribution of the return light quantity when reproduction is performed from the optical recording medium 90 by the optical recording/reproducing apparatus having the optical pickup 300 configured as described above. The results of this simulation are shown in Figs. 3A and 3B. In this example, the numerical aperture NA of the condenser lens 104 was set to 1.84, and using an SIL as the near-field-light radiating section 106, the refractive index thereof was set to 2.075. Fig. 3A shows light distribution on the first detecting potion 121, and Fig. 3B shows light distribution on the second detecting section 122. As can be appreciated from Figs. 3A and 3B, the distribution on the second detecting section 122 side exhibits low light quantity at the center, and it is assumed that the resulting reproduction characteristics differ from the normal reproduction characteristics.

Figs. 4A and 4B each show a signal when the track pitch of the recording track is 0.16 $\mu$m, and a groove with a depth of 20 nm is crossed. In Fig. 4A, the solid line a1 indicates the first sum signal, that is, the RF signal, obtained from the first detecting section 121, and the solid line a2 indicates the first difference signal, that is, the push-pull signal PP1, obtained from the first detecting section 121. Further, in Fig. 4B, the solid line b1 indicates the second sum signal, that is, the gap error signal, obtained from the second detecting section 122, and the solid line b2 indicates the second difference signal PP2 obtained from the second detecting section 122. A comparison between Figs. 4A and 4B reveals that the second difference signal PP2 obtained from the second detecting section 122 is extremely small relative to the first difference signal PP1.

Fig. 5A and 5B show the respective signals in the case where the condenser lens is shifted by 0.1 mm in the direction perpendicular to the extending direction of the track, with respect to an optical recording medium with the same recording track configuration. In Fig. 5A, the solid line c1 indicates the first sum signal, that is, the RF signal, obtained from the first detecting section 121, and the solid line c2 indicates the first different signal that is, the push-pull signal PP1, obtained from the first detecting section 121. Further, in Fig. 5B, the solid line d1 indicates the second sum signal, that is, the gap error signal, obtained from the second detecting section 122, and the solid line d2 indicates the difference signal obtained from the second detecting section 122.

In each of the cases, the signal level at the position 0 is shifted from that in the state with no offset, which indicates that the offset of the push pull signal is included due to the shift of light distribution on the detecting section. However, it is apparent that in comparison to the value of (offset)/(amplitude) of the push-pull signal on the first detecting section 121 side, the value of (offset)/(amplitude) on the second detecting section 122 side is extremely small. That is, the resolution of the signal detected on the second detecting section 122 side is poor, and the original tracking error signal level when the groove is crossed is small relative to the offset due to the shift of light distribution on the detecting section.

Accordingly, the offset can be cancelled by obtaining the tracking error signal TE anew through the following computation:

$$TE = PP1 - k \times PP2$$

As show in Fig. 6, a signal indicated by the solid line e2, which is obtained by subtracting $k \times PP2$ from PP1 indicated by the solid line e1, becomes the offset-corrected tracking error signal.

It should be noted that in this example, since the average value ar of the signal PP1 indicated by the solid line c2 in Fig. 5A is 0.0171, and the average value ag of the signal PP2 indicated by the solid line d2 in Fig. 5B is -0.073, in the example shown in Fig. 6, the coefficient k is set as follows:

$$k = (-0.0171)/(-0.0073) \approx 2.3$$

The value of the coefficient k varies depending on such other factors as the configuration of the groove in the recording track of the optical recording medium, that is, the track pitch and depth, and also the numerical aperture of the condenser lens or the like. It is desirable that the value of the coefficient k be suitably selected in accordance with the conditions of the objective optical recording medium and of the optical system of an optical recording/reproducing apparatus using this optical recording medium.

As described above, in the second detecting section 122 from which the gap error signal is obtained, the difference signal of the light-receiving sections, which are split in the direction corresponding to the extending direction of the recording track of the optical recording medium 90, contains information on the offset of the condenser lens, and contains almost no tracking error signal component. Accordingly, it will be appreciated that by performing the computation processing with respect to the configuration described above with reference to Fig. 1B, a tracking error signal whose offset is corrected in a satisfactory manner can be obtained.

Next, a second embodiment of the present invention will be described with reference to Figs. 7A and 7B. In Figs. 7A and 7B, the portions corresponding to those of Figs. 1A and 1B described with reference to the first embodiment are denoted by the same reference numerals.

While the Wollaston prism 110 is used as the separating section for separating the P-polarized and S-polarized components in the above-mentioned first embodiment, in this embodiment, as shown in Fig. 7A, a Glan-Thompsom prism 130 is used as the separating section. Otherwise, the configuration of the optical system is the same as that of the optical pickup 100 described in the first embodiment.

Figs. 7A and 7B are schematic diagrams of an optical recording/reproducing apparatus according to the second embodiment of the present invention. Fig. 7A is a schematic side-view diagram of an optical pickup according to an embodiment of the present invention, and Fig. 7B is a schematic diagram of the main portion of an optical recording/reproducing apparatus according to an embodiment of the present invention, including the planar structure of the detecting section of the optical pickup shown in Fig. 7A.

As indicated by the two-dot chain line in Fig. 7A, the optical pickup 100 includes a light source 101 such as a semiconductor laser, an optical system 300 that irradiates an optical recording medium 90 with light from the light source 101 as near-field light by means of a condenser lens 104 with a numerical aperture of 1 or more, and introduces the light reflected by the optical recording medium 90 to a detecting section 140, and a drive section 107 formed by a two-axis or three-axis actuator or the like for driving the condenser lens 104.

In the optical system 300, a beam splitter 102 that transmits light from the light source 101 and reflects both the P-polarized component and S-polarized component of the reflected light from the light recording medium 90, and a λ/4 plate 103 are arranged in this order between the light source 101 and the condenser lens 104. Further, the Glan-Thompsom prism 130 is provided as a separating section for separating the P-polarized component and S-polarized component reflected by the beam splitter 102. The detecting section 140 for individually detecting the P-polarized component and the S-polarized component separated by the Glan-Thompsom prism 130 is provided on the emergent side of the Glan-Thompsom prism 130.

In this case as well, an optical lens 105 and a near-field-light radiating section 106 such as an SIL are provided as the condenser lens 104. Since the SIL used is the same as that described with reference to the first embodiment mentioned above, description thereof is omitted.

In the optical pickup 100 configured as described above, light emitted from the light source 101 is passed through the beam splitter 102 to be incident on the 1/4 wavelength plate 103. The λ/4 plate 103 is placed with its crystal axis tilted by 45° with respect to the incident polarization direction, and causes incident light to emerge as circularly polarized light. This emergent light is made incident on a signal-recording surface of the optical recording medium 90 as near-field light by the condenser lens 104.

The light reflected by the surface of the optical recording medium 90 is made incident on the λ/4 plate 103 again via the near-field-light radiating section 106 and the optical lens 105, and changes from circularly polarized light into linearly polarized light as it passes through the λ/4 plate 103. Both of the S-polarized component and P-polarized component of the light beam transmitted through the λ/4 plate 103 are reflected laterally by the beam splitter 102. The beam splitter 102 reflects, for example, 50% of the light incident from the optical lens 105 laterally at its reflecting surface.

The return light reflected laterally by the beam splitter 102 is made incident on the separating section for separating S-polarized and P-polarized components. The Glan-Thompsom prism 130 is used as the separating section in this example. The Glan-Thompsom prism 130 separates the light into S-polarized and P-polarized components. Of the S-polarized and P-polarized components, a light component having the same polarization as the light incident on the optical recording medium 90 is made incident on a first detecting section 141 of the detecting section 140, and a light component of different polarization from the light incident on the optical recording medium 90 is made incident on a second detecting section 142 of the detecting section 140.

As shown in Fig. 8A, the Glan-Thompsom prism 130 is formed by bonding a glass 131 and a prism 132 together at a bonding surface 133. When the travel direction of light, and the horizontal and vertical directions within an incidence plane are indicated by the arrow x2, and the arrows y2 and z2, respectively, the bonding surface 133 is tilted in the travel direction of light indicated by the arrow x2 with respect to the incidence plane. With regard to light polarized in the same direction as the C-axis direction of the prism 132, due to refraction at the bonding surface 133, incident light L4 is separated at the bonding surface 133 as indicated by the arrows L5 and L6 depending on the polarization. That is, a light component polarized in the same direction as the C-axis direction of the prism 132 has an angle of emergence θO3 at the bonding surface 133 which satisfies the following relation:

$$nG \times \sin\theta i2 = n3 \times \sin\theta O3.$$

where θi2 is the incidence angle. Further, as shown in Fig. 8B, nG is the refractive index of the glass, and n3 is the refractive index in the C-axis direction of the prism 132 indicated by the arrow c3. Further, light polarized in the direction opposite to the C-axis direction of the prism 132 has an angle of emergence θO4 at the bonding surface 133 which satisfies the following relation:

$$nG \times \sin\theta i2 = n4 \times \sin\theta O4$$

where n4 is the refractive index of the prism 132 in the opposite direction.

Accordingly, by placing the detecting section 140, which has the first and second detecting sections 141 and 142 arranged adjacent to each other on the same plane, at the emerging position of the light transmitted through the Glan-Thompsom prism 130, the polarized component of the same polarization as the light incident on the optical recording medium 90 can be made incident on the first detecting section 141 of the detecting section 140, and the other polarized component, that is, the polarized component of the polarization orthogonal to the polarization of the light incident on the optical recording medium 90, can be made incident on the second detecting section 142 of the detecting section 140.

In this case, the S-polarized and P-polarized components of the reflected light from the optical recording medium 90 can be individually detected by means of a simple structure using one beam splitter 102 and one separating section, that is, the Glan-Thompsom prism 130. Accordingly, as compared with a case in which a plurality of beam splitters or polarization beam splitters are used as in the related art, the structure of the optical pickup can be simplified, which also contributes to reducing the size of the optical pickup.

Further, since the two polarized components emerging from the Glan-Thompsom prism 130 are in close proximity to each other, it is possible to use a small-sized detecting section 140 having light-receiving sections provided at two adjacent positions on the same base such as the same semiconductor substrate or the like. As compared with a case where a plurality of photo-detectors are arranged at different positions as in the related art, the structure of the photo-detector can be simplified. Further, when mounted to an optical recording/reproducing apparatus, the optical pickup according to this embodiment also contributes to simplifying the structure and reducing the size of the recording/reproducing apparatus.

It should be noted that since the Wollaston prism 110 described in the first embodiment mentioned above and the Glan-Thompsom prism 130 differ from each other in the emergence angles of the two polarized components, it is necessary to set the arrangement position of the detecting section 140 used in this embodiment, including the spacing between the first and second detecting sections 141 and 142, to be a position slightly different from that of the detecting section 120 described in the first embodiment.

Further, in this embodiment as well, as shown in Fig. 7B, the first and second detecting sections 141 and 142 are respectively provided with two light-receiving regions A3 and B3, and A4 and B4 that are split at least in the direction corresponding to the extending direction of the recording track of the optical recording medium 90.

It should be noted that in Fig. 7A, when the optical recording medium 90 has, for example, a disk-like shape, the radial direction is taken as the x-axis, the extending direction (so-called tangential direction) of the recording track is taken as the y-axis, and the direction perpendicular to the surface of the optical recording medium 90 (which substantially corresponds to the optical axis of the optical system 300) is taken as the z-axis. In Fig. 7B, the directions corresponding to these directions are taken as the x-axis, the y-axis, and the z-axis, respectively. In this case as well, in the illustrated example, the first and second detecting sections 141 and 142 are each split in two along a parting line extending along the γ-axis direction.

The sum signal of the respective light-receiving regions A3 and B3 of the first detecting section 142 is computed by an adder 128, and is output as an RF reproduction signal. This is defined as a first sum signal. Further, the difference signal of the light-receiving regions A3 and B3 is computed by a subtracter 129, and is output as a first difference signal.

The sum signal of the light-receiving regions A4 and B4 of the second detecting section 142 is computed by an adder 124, and is output as a gap error signal GE. This is defined as a second sum signal. Further, the difference signal of the light-receiving regions A4 and B4 is computed by a subtracter 125 and output. This is defined as a second difference signal.

As described above with reference to the first embodiment, the second difference signal is a signal that includes information on the offset of the condenser lens and almost no tracking information. Accordingly, by subtracting a signal PP2, which is obtained by multiplying the second difference signal by a coefficient k for adjusting an output value by a multiplier 126, from the first difference signal PP1 by a subtracter 127, an offset-corrected tracking control signal TE can be obtained in this case as well.

The tracking error signal TE and the above-mentioned gap error signal GE thus obtained are input to a control section 200. The control section 200 sends a command to a servo circuit 201 so as to keep the light intensity of each of the tracking error signal and gap error signal obtained from the detecting section 140 to be a predetermined intensity, and outputs a signal Sa for driving the drive section 107 in an appropriate manner, thereby placing the condenser lens 104 onto a predetermined recording track of the optical recording medium 90, and keeping the spacing between the surface of the optical recording medium 90 and the front end portion of the near-field-light radiating section 106 such as an SIL to be a fixed distance. In this way, it is possible to perform recording and/or reproduction in which near-field-light is irradiated onto the optical recording medium 90.

In this case as well, the RF signal obtained from the first sum signal becomes a signal corresponding to the irregularities of the pits or recording marks on the optical recording medium 90, thus enabling the reproduction of information recorded on the optical recording medium 90. The second sum signal becomes the gap error signal GE whose light intensity changes in accordance with the distance between the surface of the optical recording medium 90 and the front end surface of the near-field-light radiating section 106 such as an SIL. Accordingly, like the optical pickup and the optical recording/reproducing apparatus described above with reference to the first embodiment, in this embodiment as well, the optical pickup can be simplified in structure and reduced in size, which also contributes to simplifying the structure and reducing the size of the recording/reproducing apparatus.

Next, a third embodiment of the present invention will be described with reference to Figs. 9A and 9B. In Figs. 9A and 9B, the portions corresponding to those of Figs. 1A and 1B, and Figs. 7A and 7B described in the first and second embodiments are denoted by the same reference numerals.

While a Wollaston prism or Glan-Thompsom prism is used as the separating section for separating the P-polarized and S-polarized components in the above-mentioned first and second embodiments, in this embodiment, a polarization splitting grating is used as the separating section. Otherwise, the configuration of the optical system is the same as that of the optical pickup 100 described in each of the first and second embodiments.

Figs. 9A and 9B are schematic diagrams of an optical recording/reproducing apparatus according to the third embodiment of the present invention. Fig. 9A is a schematic side-view diagram of an optical pickup according to an embodiment of the present invention, and Fig. 9B is a schematic diagram of the main portion of an optical recording/reproducing apparatus according to an embodiment of the present invention, including the planar structure of the detecting section of the optical pickup shown in Fig. 9A.

As indicated by the two-dot chain line in Fig. 9A, the optical pickup 100 includes a light source 101 such as a semiconductor laser, an optical system 300 that irradiates an optical recording medium 90 with light from the light source 101 as near-field light by means of a condenser lens 104 with a numerical aperture of 1 or more, and introduces the light reflected by the optical recording medium 90 to a detecting section 160, and a drive section 107 formed by a two-axis or three-axis actuator or the like for driving the condenser lens 104.

In the optical system 300, a beam splitter 102 that transmits light from the light source 101 and reflects both the P-polarized component and S-polarized component of the reflected light from the light recording medium 90, and a $\lambda/4$ plate 103 are arranged in this order between the light source 101 and the condenser lens 104. Further, a polarization splitting grating 150 is provided as a separating section for separating the P-polarized component and S-polarized component reflected by the beam splitter 102. The detecting section 160 for individually detecting the P-polarized component and the S-polarized component separated by the polarization splitting grating 150 is provided on the emergent side of the polarization splitting grating 150.

In this case as well, an optical lens 105 and a near-field-light radiating section 106 such as an SIL are provided as the condenser lens 104. Since the SIL used is the same as that described with reference to the first embodiment mentioned above, description thereof is omitted.

In the optical pickup 100 configured as described above, light emitted from the light source 101 is passed through the beam splitter 102 to be incident on the 1/4 wavelength plate 103. The $\lambda/4$ plate 103 is placed with its crystal axis tilted by 45° with respect to the incident polarization direction, and causes incident light to emerge as circularly polarized light. This emergent light is made incident on a signal-recording surface of the optical recording medium 90 as near-field light by the condenser lens 104.

The light reflected by the surface of the optical recording medium 90 is made incident on the $\lambda/4$ plate 103 again via the near-field-light radiating section 106 and the optical lens 105, and changes from circularly polarized light into linearly polarized light as it passes through the λ/4 plate 103. Both of the S-polarized component and P-polarized component of the light beam transmitted through the λ/4 plate 103 are reflected laterally by the beam splitter 102. The beam splitter 102 reflects, for example, 50% of the light incident from the optical lens 105 laterally at its reflecting surface.

The return light reflected laterally by the beam splitter 102 is made incident on the separating section for separating S-polarized and P-polarized components. The polarization splitting grating 150 is used as the separating section in this example. The polarization splitting grating 150 separates the light into S-polarized and P-polarized components. Of the S-polarized and P-polarized components, a light component of the same polarization as the light incident on the optical recording medium 90 is made incident on a first detecting section 161 of the detecting section 160, and a light component of different polarization from the light incident on the optical recording medium 90 is made incident on a second detecting section 162 of the detecting section 160.

The polarization splitting grating 150 has a substrate formed by crystal such as LiNbO3 and refractive-index modulating regions 151 formed in the shape of a grating on the surface of the substrate. The refractive-index modulating regions 151 are formed by hydrogen-substitution regions in which lithium (Li) is substituted for by hydrogen (H). As shown in Fig. 10A, with the travel direction of light, and the horizontal and vertical directions within an incidence plane indicated by the arrows x3, y3, and z3, respectively, the refractive-index modulating regions 151 constituting the grating are formed in the shape of stripes extending in the direction indicated by the arrow y3 and having a periodic structure in the direction indicated by the arrow z3. When light is made incident on the polarization splitting grating 150 as indicated by the arrow L7, the light emerges as light indicated by the arrow L8, and light indicated by the arrows L9 and L10.

Here, as shown in Fig. 10B, the refractive index in the C-axis direction indicated by the arrow c4 is represented by $n_5$, and the refractive index in the opposite direction is represented by $n_6$. As shown in Fig. 10B, the C-axis of the crystal such as $LiNb_3$ is selected in the horizontal direction of the incident plane indicated by the arrow y3.

As shown in Fig. 10C, when the thickness of the substituted refractive-index modulating region 151 is T, with respect to the polarized component in the C-axis direction, a phase difference of $2\pi(n_5 - n_6)T/\lambda$ is generated between the refractive-index modulating regions 151 and the other regions, thus enabling operation as a grating. That is, light is caused to emerge as ±1-order diffracted light. On the other hand, with respect to the polarized component in the direction opposite to the C-axis direction, since there is no difference in refractive index between the substituted regions and the other regions, light is allowed to pass through as it is and emerges as 0-order light. When the pitch of the grating is P, the angle e of the polarized component in the C-axis direction that is diffracted is given by $\lambda/P = \sin\theta$.

Accordingly, as shown in Fig. 9B, by placing the detecting section 160, which has the first and second detecting sections 161 and 162 arranged adjacent to each other on the same plane, at the emerging position of the light transmitted through the polarization splitting grating 150, the polarized component of the same polarization as the light incident on the optical recording medium 90 can be made incident on the first detecting section 161 of the detecting section 160, and the other polarized component, that is, the polarized component of the polarization orthogonal to the polarization of the light incident on the optical recording medium 90, can be made incident on the second detecting section 162 of the detecting section 160. This embodiment is directed to a case in which only the ±1-order diffracted light and 0-order diffracted light that are diffracted by the polarization splitting grating 150 are made incident on the first and second detecting sections 161 and 162, respectively, for use.

In this case as well, the S-polarized and P-polarized components of the reflected light from the optical recording medium 90 can be individually detected by means of a simple structure using one beam splitter 102 and one separating section, that is, the polarization splitting grating 150. Accordingly, as compared with a case in which a plurality of beam splitters or polarization beam splitters are used as in the related art, the structure of the optical pickup can be simplified, which also contributes to reducing the size of the optical pickup.

Further, since the two polarized components emerging from the polarization splitting grating 150 are in close proximity to each other, it is possible to use a small-sized detecting section 160 having light-receiving sections provided at two adjacent positions on the same base such as the same semiconductor substrate or the like. As compared with a case where a plurality of photo-detectors are arranged at different positions as in the related art, the structure of the photo-detector can be simplified. Further, when mounted to an optical recording/reproducing apparatus, the optical pickup according to this embodiment also contributes to simplifying the structure and reducing the size of the recording/reproducing apparatus.

It should be noted that since the Wollaston prism 110 and the Glan-Thompsom prism 130 described in the first and second embodiments mentioned above and the polarization splitting grating 150 differ from each other in the emergence angles of the two polarized components, it is necessary to set the arrangement position of the detecting section 160 used in this embodiment, including the spacing between the first and second detecting sections 161 and 162, to be a position slightly different from those of the detecting sections 120 and 140 described in the first and second embodiments.

Further, in this embodiment as well, as shown in Fig. 9B, the first and second detecting sections 161 and 162 are respectively provided with two light-receiving regions A5 and B5, and A6 and B6 that are split at least in the direction corresponding to the extending direction of the recording track of the optical recording medium 90.

In this embodiment as well, in Fig. 9A, when the optical recording medium 90 has, for example, a disk-like shape, the radial direction is taken as the x-axis, the extending direction (so-called tangential direction) of the recording track is taken as the y-axis, and the direction perpendicular to the surface of the optical recording medium 90 (which substantially corresponds to the optical axis of the optical system 300) is taken as the z-axis. In Fig. 9B, the directions corresponding to these directions are taken as the x-axis, the y-axis, and the z-axis, respectively. In this case as well, in the illustrated example, the first and second detecting sections 161 and 162 are each split in two along a parting line extending along the y-axis direction.

The sum signal of the respective light-receiving regions A5 and B5 of the first detecting section 161 is computed by an adder 128, and is output as an RF reproduction signal. This is defined as a first sum signal. Further, the difference signal of the light-receiving regions A5 and B5 is computed by a subtracter 129, and is output as a first difference signal.

The sum signal of the light-receiving regions A6 and B6 of the second detecting section 162 is computed by an adder 124, and is output as a gap error signal GE. This is defined as a second sum signal. Further, the difference signal of the light-receiving regions A6 and B6 is computed by a subtracter 125 and output. This is defined as a second difference signal.

As described above with reference to the first embodiment, the second difference signal is a signal that includes information on the offset of the condenser lens and almost no tracking information. Accordingly, by subtracting a signal PP2, which is obtained by multiplying the second difference signal by a coefficient k for adjusting an output value by a multiplier 126, from the first difference signal PP1 by a subtracter 127, an offset-corrected tracking control signal TE can be obtained in this case as well.

The tracking error signal TE and the above-mentioned gap error signal GE thus obtained are input to a control section 200. The control section 200 sends a command to a servo circuit 201 so as to keep the light intensity of each of the tracking error signal and gap error signal obtained from the detecting section 160 to be a predetermined intensity, and outputs a signal Sa for driving the drive section 107 in an appropriate manner, thereby placing the condenser lens 104 onto a predetermined recording track of the optical recording medium 90, and keeping the spacing between the surface of the optical recording medium 90 and the front end portion of the near-field-light radiating section 106 such as an SIL to be a fixed distance. In this way, it is possible to perform recording and/or reproduction in which near-field-light is irradiated onto the optical recording medium 90.

In this case as well, the RF signal obtained from the first sum signal becomes a signal corresponding to the irregularities of the pits or recording marks on the optical recording medium 90, thus enabling the reproduction of information recorded on the optical recording medium 90. The second sum signal becomes the gap error signal GE whose light intensity changes in accordance with the distance between the surface of the optical recording medium 90 and the front end surface of the near-field-light radiating section 106 such as an SIL. Accordingly, like the optical pickup and the optical recording/reproducing apparatus described above with reference to the first embodiment, in this embodiment as well, the optical pickup can be simplified in structure and reduced in size, which also contributes to simplifying the structure and reducing the size of the recording/reproducing apparatus.

Next, description will be given of a case where, while a polarization splitting grating is used as the separating section for separating polarized components as in the third embodiment mentioned above, the separated 0-order light and ±1-order diffracted light are detected and used for computing a tracking error signal.

Figs. 11A and 11B are schematic diagrams of an optical recording/reproducing apparatus according to a fourth embodiment of the present invention. Fig. 11A is a schematic side-view diagram of an optical pickup according to an embodiment of the present invention, and Fig. 11B is a schematic diagram of the main portion of an optical recording/reproducing apparatus according to an embodiment of the present invention, including the planar structure of the detecting section of the optical pickup shown in Fig. 11A.

It should be noted that the optical pickup and the optical recording/reproducing apparatus according to this embodiment are of the same configuration as those of the third embodiment mentioned above except for the detecting section and the portion for performing computation thereof. Accordingly, in Figs. 11A and 11B, the portions corresponding to those of Figs. 9A and 9B are denoted by the same reference numerals and detailed description thereof will be omitted.

In this embodiment, a polarization splitting grating 150 is provided as the separating section, and a detecting section 180, which has first to third detecting sections 181 to 183 arranged adjacent to each other on the same plane, is arranged at the emerging portion of light from the polarization splitting grating 150. As shown in Fig. 11B, of the first and third detecting sections 181 to 183, the first detecting section 181 is arranged at the center, and the second and third detecting sections 182 and 183 are arranged on both sides of the first detecting section 181.

Further, in the first detecting section 181, the polarized component of the same polarization as the light incident on the optical recording medium 90, which is separated by the polarization splitting grating 150, can be made incident on the first detecting section 181 of the detecting section 180. Further, the other polarized component, that is, the polarized component of the polarization orthogonal to the polarization of the light incident on the optical recording medium 90, can be made incident on the second and third detecting sections 182 and 183 of the detecting section 180.

In this case as well, as in the third embodiment mentioned above, the S-polarized and P-polarized components of the reflected light from the optical recording medium 90 can be individually detected by means of a simple structure using one beam splitter 102 and one separating section, that is, the polarization splitting grating 150. Accordingly, as compared with a case in which a plurality of beam splitters or polarization beam splitters are used as in the related art, the structure of the optical pickup can be simplified, which also contributes to reducing the size of the optical pickup.

Further, since the two polarized components emerging from the polarization splitting grating 150 are in close proximity to each other, it is possible to use a small-sized detecting section 180 having light-receiving sections provided at three adjacent positions on the same base such as the same semiconductor substrate or the like. As compared with a case where a plurality of photo-detectors are arranged at different positions as in the related art, the structure of the photo-detector can be simplified. Further, when mounted to an optical recording/reproducing apparatus, the optical pickup according to this embodiment also contributes to simplifying the structure and reducing the size of the recording/reproducing apparatus.

Further, in this embodiment, as shown in Fig. 11B, the first to third detecting sections 181 to 183 are respectively provided with two light-receiving regions A7 and B7, A8 and B8, and A9 and B9 that are split at least in the direction corresponding to the extending direction of the recording track of the optical recording medium 90.

The sum signal of the respective light-receiving regions A7 and B7 of the first detecting section 181 is computed by an adder 128, and is output as an RF reproduction signal. This is defined as a first sum signal. Further, the difference signal of the light-receiving regions A7 and B7 is computed by a subtracter 129, and is output as a first difference signal.

In this case, the light-receiving regions A8 and A9, and B8 and B9 on the same side of the second and third detecting sections 182 and 183 are first subjected to addition by adders 170 and 171. Then, the sum signal of the regions A8 and A9, and B8 and B9 respectively subjected to addition is computed by an adder 124, and is output as a gap error signal GE. This is defined as a second sum signal. Further, the difference signal between the sum of the light-receiving regions A8 and B9 and the sum of the light-receiving regions B8 and B9 is computed by a subtracter 125 and output. This is defined as a second difference signal.

As described above with reference to the first embodiment, the second difference signal is a signal that includes information on the offset of the condenser lens and almost no tracking information. Accordingly, by subtracting a signal PP2, which is obtained by multiplying the second difference signal by a coefficient k for adjusting an output value by a multiplier 126, from the first difference signal PP1 by a subtracter 127, an offset-corrected tracking control signal TE can be obtained in this case as well.

The tracking error signal TE thus obtained is advantageous in that when the extending direction of the polarization splitting grating is displaced with respect to the direction corresponding to the extending direction of the recording track of the optical recording medium 90, that is, the direction along the y-axis in Fig. 11A, this displacement can be cancelled by performing computation using the sum signal of the $\pm 1$-order diffracted light.

The tracking error signal TE and the above-mentioned gap error signal GE thus obtained are input to a control section 200. As in the third embodiment mentioned above, the control section 200 sends a command to a servo circuit 201, and outputs a signal Sa for driving the drive section 107 in an appropriate manner, thereby placing the condenser lens 104 onto a predetermined recording track of the optical recording medium 90, and keeping the spacing between the surface of the optical recording medium 90 and the front end portion of the near-field-light radiating section 106 such as an SIL to be a fixed distance. In this way, in this embodiment as well, it is possible to perform recording and/or reproduction in which near-field-light is irradiated onto the optical recording medium 90.

In this case as well, the RF signal obtained from the first sum signal becomes a signal corresponding to the irregularities of the pits or recording marks on the optical recording medium 90, thus enabling the reproduction of information recorded on the optical recording medium 90. The second sum signal becomes the gap error signal GE. Accordingly, like the optical pickup and the optical recording/reproducing apparatus described above with reference to the first embodiment, in this embodiment as well, the optical pickup can be simplified in structure and reduced in size, which also contributes to simplifying the structure and reducing the size of the recording/reproducing apparatus.

It should be noted that in each of the above-mentioned embodiments, although not shown, by supplying the output of the RF signal obtained by the detecting section to a reproducing block for reproduction processing, information recorded on the optical recording medium 90 can be reproduced. Further, at the time of recording information onto the optical recording medium 90, recording processing can be performed by generating a drive signal for the light source 101 such as a semiconductor laser (in the case of a recording medium using pits or phase changes) or a drive signal for a magnetic-field modulation coil (in the case of a magneto-optical disk) by means of a signal that has been subjected to recording processing in a recording block. Further, the control section for performing a servo control is also adapted to perform a servo control of a spindle motor (not shown) for rotationally driving the optical recording medium 90.

As has been described above, according to the present invention, the gap error and the RF reproduction signal can be obtained by means of a relatively simple structure using one beam splitter and one separating section. Further, the light-receiving region of the detecting section for detecting the gap error signal is split into at least two regions, and the difference signal of the two regions is determined, thereby making it possible to readily obtain a tracking error signal with the offset of the condenser lens corrected.

The present invention is not limited to the above-mentioned embodiments, but can employ various other structures without departing from the gist of the present invention. For example, as the means for separating P-polarized and S-polarized waves, a separating section other than the Wollaston prism, the Glan-Thompsom prism, and the polarization splitting grating described with reference to the first to fourth embodiments mentioned above may be used. Even when using a polarization splitting grating, a polarization splitting grating of a crystal structure other than those described with reference to the above-mentioned embodiments may be used. Further, it is needless to mention that the servo mechanism may be a mechanism that has a structure other than the one shown in each of Figs. 1, 7, 9 and 11, and drives an SIL or the like.

Further, while in the above-mentioned embodiments the description is directed to the example in which the first and second detecting sections, or the first to third detecting sections of the detecting section are each split in two, the detecting section may be formed so as to have more than two, for example, four split light-receiving regions. Further, it is needless to mention that various modifications and alterations can be made to the configurations of the detecting section, computing circuit, and the like.

## Claims

1. An optical recording/reproducing apparatus comprising an optical pickup (100) and a control section (200), the optical pickup (100) including:

    a detecting section (120);
    an optical system that radiates light from a light source (101) onto an optical recording medium (90) as near-field light by a condenser lens (104) having a numerical aperture of 1 or more, and introduces light reflected by the optical recording medium (90) toward the detecting section (120); and
    a drive section (107) that drives the condenser lens (104),
the optical recording/reproducing apparatus being configured to perform control for recording onto and/or reproducing from the optical recording medium (90) on the basis of an optical output detected by the detecting section (120) of the optical pickup (100),
wherein the optical system includes

    a beam splitter (102) that reflects both a P-polarized component and an S-polarized component of reflected light from the optical recording medium (90), and
    a separating section (110) that separates the P-polarized component and the S-polarized component reflected by the beam splitter (102),

wherein the detecting section (120) individually detects the P-polarized component and the S-polarized component separated by the separating section (110),
wherein the detecting section (120) includes at least a first detecting section (121) that detects a polarized component having the same polarization as polarization of light incident on the optical recording medium (90), and a second detecting section (122) that detects a polarized component orthogonal to the polarization of light incident on the optical recording medium (90),
wherein the first and second detecting sections (121, 122) each include two or more light-receiving regions (A1, B1; A2, B2) that are split at least in a direction corresponding to an extending direction of a recording track of the optical recording medium (90),
wherein a tracking control signal in which offset of the condenser lens (104) is corrected is obtained by computation using a first difference signal and a second difference signal, the first difference signal being a difference signal of the light-receiving regions (A1, B1) of the first detecting section (121) which are split in the direction corresponding to the extending direction of the recording track, the second difference signal being a difference signal of the light-receiving regions (A2, B2) of the second detecting section (122) which are split in the direction corresponding to the extending direction of the recording track, and
wherein the control section controls the drive section on the basis of the tracking control signal.

2. The optical recording/reproducing apparatus according to Claim 1, wherein:

    a Wollaston prism (110) is used as the separating section.

3. The optical recording/reproducing apparatus according to Claim 1, wherein:

a Glan-Thompsom prism (130) is used as the separating section.

4. The optical recording/reproducing apparatus according to Claim 1, wherein:

a polarization splitting grating (150) is used as the separating section;
0-order light from the polarization splitting grating (150) is detected by the first detecting section (161, 181); and
+1-order light or -1-order light from the polarization splitting grating (150) is detected by the second detecting section (162, 182).

5. The optical recording/reproducing apparatus according to Claim 1, wherein:

the first and second detecting sections (121, 122) are provided on the same base.

6. The optical recording/reproducing apparatus according to Claim 1, wherein:

a reproduction signal of the optical recording medium (90) is generated and output on the basis of a sum signal of the light-receiving regions (A1, B1) of the first detecting section (121) which are split in the direction corresponding to the extending direction of the recording track; and
a gap error signal for controlling a gap between the condenser lens (104) and the optical recording medium (90) is generated and output on the basis of a sum signal of the light-receiving regions (A2, B2) of the second detecting section (122) which are split in the direction corresponding to the extending direction of the recording track.

7. The optical recording/reproducing apparatus according to Claim 4, wherein:

the detecting section (180) further includes, in addition to the first and second detecting sections (181, 182), a third detecting section (183) that detects a polarized component orthogonal to the polarization of light incident on the optical recording medium (90);
the third detecting section (183) has two or more light-receiving regions (A9, B9) that are split at least in the direction corresponding to the extending direction of the recording track of the optical recording medium (90);

one of the +1-order light and -1-order light from the polarization splitting grating (150) of the separating section is detected by the second detecting section (182), and the other is detected by the third detecting section (183); and
a tracking control signal is obtained by computation using the first difference signal and the second difference signal, the first difference signal being a difference signal of the light-receiving regions (A7, B7) of the first detecting section (181) which are split in the direction corresponding to the extending direction of the recording track (90), the second difference signal being a difference signal between the sum of signals of one light-receiving sections (A8, A9) and the sum of signals of the other light-receiving sections (B8, B9) of the second and third detecting sections (182, 183) which are split in the direction corresponding to the extending direction of the recording track(90).

8. An optical pickup comprising:

a detecting section (120);
an optical system that radiates light from a light source (101) onto an optical recording medium (90) as near-field light by a condenser lens (104) having a numerical aperture of 1 or more, and introduces light reflected by the optical recording medium (90) toward the detecting section (120); and
a drive section (107) that drives the condenser lens (104) on the basis of an optical output detected by the detecting section (120),
wherein the optical system includes

a beam splitter (102) that reflects both a P-polarized component and an S-polarized component of reflected light from the optical recording medium (90), and
a separating section (110) that separates the P-polarized component and the S-polarized component reflected by the beam splitter (102),

wherein the detecting section (120) individually detects the P-polarized component and the S-polarized component separated by the separating section (110),
wherein the detecting section (120) includes at least a first detecting section (121) that detects a polarized component having the same polarization as polarization of light incident on the optical recording medium (90), and a second detecting section (122) that detects a polarized component orthogonal to the polarization of light incident on the optical recording medium (90),
wherein the first and second detecting sections (121, 122) each include two or more light-receiving regions (A1 B1; A2, B2) that are split at least in a direction corresponding to an extending direction of a recording track of the optical recording medium (90),

wherein a difference signal of the light-receiving regions (A1, B1) of the first detecting section (121) which are split in the direction corresponding to the extending direction of the recoding track is output to the external as a first difference signal,

wherein a difference signal of the light-receiving regions (A2, B2) of the second detecting section (122) which are split in the direction corresponding to the extending direction of the recording track is output to the external as a second difference signal, and

wherein a tracking control signal in which offset of the condenser lens (104) is corrected is externally computed from the first difference signal and the second difference signal.

9. The optical pickup according to Claim 8, wherein:

a Wollaston prism (110) is used as the separating section.

10. The optical pickup according to Claim 8, wherein:

a Glan-Thompsom prism (130) is used as the separating section.

11. The optical pickup according to Claim 8, wherein:

a polarization splitting grating (150) is used as the separating section;
0-order light from the polarization splitting grating (150) is detected by the first detecting section (161, 181); and
+1-order light or -1-order light from the polarization splitting grating (150) is detected by the second detecting section (162, 182).

12. The optical pickup according to Claim 8, wherein:

the first and second detecting sections (121, 122) are provided on the same base.

13. The optical pickup according to Claim 8, wherein:

a reproduction signal of the optical recording medium (90) is generated and output on the basis of a sum signal of the light-receiving regions (A1, B1) of the first detecting section (121) which are split in the direction corresponding to the extending direction of the recording track; and
a gap error signal for controlling a gap between the condenser lens (104) and the optical recording medium (90) is generated and output a sum signal of the light-receiving regions (A2, B2) of the second detecting section (122) which are split in the direction corresponding to the extending direction of the recording track.

14. A tracking error signal detecting method in which light from a light source is radiated onto an optical recording medium (90) as near-field light by a condenser lens (104) having a numerical aperture of 1 or more, light reflected by the optical recording medium (90) is detected as an optical output, and a control signal for driving the condenser lens (104) onto a recording track of the optical recording medium (90) is obtained on the basis of the detected optical output, comprising the steps of:

detecting a P-polarized component and an S-polarized component of reflected light from the optical recording medium (90) individually by a detecting section (120);
providing the detecting section (120) with at least a first detecting section (121) and a second detecting section (122), the first detecting section (121) detecting a polarized component having the same polarization as polarization of light incident on the optical recording medium (90), the second detecting section (122) detecting a polarized component orthogonal to the polarization of light incident on the optical recording medium (90);
providing each of the first and second detecting sections (121, 122) with two or more light-receiving regions (A1, B1; A2, B2) that are split at least in a direction corresponding to an extending direction of a recording track of the optical recording medium (90);
outputting as a first difference signal a difference signal of the light-receiving regions (A1, B1) of the first detecting section (121) which are split in the direction corresponding to the extending direction of the recording track;
outputting as a second difference signal a difference signal of the light-receiving regions (A2, B2) of the second detecting section (122) which are split in the direction corresponding to the extending direction of the recording track; and
obtaining a tracking control signal in which offset of the condenser lens (104) is corrected, by performing computation using the first difference signal and the second difference signal.

EP 1 811 511 A2

FIG. 1B

GAP/TRACKING CONTROL SECTION — 200

SERVO CIRCUIT — 201

Sa

GE

TE

PP2 — 127

PP1

K — 126

125

124

122 B2

121 B1

129

A2 — 120

A1

128

RF

x, y, z

FIG. 1A

OPTICAL PICKUP — 100

101

c

102

110

103

120

Sa

106

105

104

107

90

300

x, y, z

18

# FIG. 2A

REFRACTIVE INDEX IN C-AXIS DIRECTION $n_1$

REFRACTIVE INDEX IN OPPOSITE DIRECTION $n_2$

# FIG. 2B

C-AXIS DIRECTION

# FIG. 3A

# FIG. 3B

# FIG. 4A

POSITION (μm)

RF DETECTION SIGNAL

# FIG. 4B

POSITION (μm)

GAP DETECTION SIGNAL

## FIG. 5A

c1:
c2:PP1

POSITION (μm)
RF DETECTION SIGNAL

## FIG. 5B

d1: GAP
d2:PP2

POSITION (μm)
GAP DETECTION SIGNAL

# FIG. 6

e1:PP1
e2:PP1 - 2.3×PP2

POSITION (μm)

TRACKING ERROR DETECTION SIGNAL

## FIG. 7A

OPTICAL PICKUP

100

300

c

101

102

130

140

103

107

Sa

105  106

104

90

z

y  x

## FIG. 7B

124

140

125  126  127

PP2

K

142
A4        B4

PP1

TE        GE

200

141
A3        B3

129

GAP/TRACKING
CONTROL
SECTION

RF

SERVO CIRCUIT

128

Sa        201

y

z  x

EP 1 811 511 A2

23

# FIG. 8A

# FIG. 8B

C-AXIS DIRECTION

REFRACTIVE INDEX
IN C-AXIS DIRECTION $n_3$

REFRACTIVE INDEX
IN OPPOSITE DIRECTION $n_4$

REFRACTIVE INDEX OF GLASS $n_G$

FIG. 9A

OPTICAL PICKUP  100

300

101

102

150

103

160

105
104
106

107

90

Sa

c

FIG. 9B

124

125 126 127

PP2

K

GE  200

GAP/TRACKING
CONTROL
SECTION

TE

PP1

162
B6

161
B5

A6

A5

160

119

RF

168

SERVO CIRCUIT  201

Sa

# FIG. 10A

# FIG. 10B

# FIG. 10C

L7

L9

L8

150

L10

REFRACTIVE INDEX
IN OPPOSITE DIRECTION $n_6$

z3

y3

x3

POLARIZATION SPLITTING GRATING

150

c4

REFRACTIVE INDEX IN C-AXIS DIRECTION $n_5$
REFRACTIVE INDEX IN OPPOSITE DIRECTION $n_6$

z3

y3

151

T

150

x3

z3

EP 1 811 511 A2

EP 1 811 511 A2

## FIG. 11A

OPTICAL PICKUP

100

300

101

c

102

180

103

150

20

Sa

105  106

104

90

z

y  x

## FIG. 11B

124

170

180

171

125

126

PP2

127

K

A8

182

B8

PP1

A7

181

B7

TE

GE

200

GAP/TRACKING
CONTROL
SECTION

129

A9

183

B9

128

RF

SERVO CIRCUIT

Sa

201

z  x

FIG. 12A

FIG. 12B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004001307 A1
- US 20040145995 A1
- US 20040013077 A1

**Non-patent literature cited in the description**

- **I. ICHIMURA.** Near-Field Phase-Change Optical Recording of 1.36 Numerical Aperture. *Jpn. J. Appl. Phys.,* 2000, vol. 39, 962-967
- **K. SAITO.** A Simulation of Magneto-Optical Signals in Near-Field Recording. *Jpn. J. Appl. Phys.,* 1999, vol. 38, 6743-6749
- **M. SHINODA.** High Density Near-Field Optical Disc Recording. *Jpn. J. Appl. Phys.,* 2005, vol. 44, 3537
- **M. FURUKI.** Progress in Electron Beam Mastering of 100Gb/inch2 Density Disc. *Jpn. J. Appl. Phys.,* 2004, vol. 43, 5044-5046